# EUROPÄISCHE PATENTSCHRIFT

(11) **EP 3 630 506 B1**
(45) Veröffentlichungstag und Bekanntmachung des Hinweises auf die Patenterteilung: **16.09.2020**
(21) Anmeldenummer: 18726758.8
(22) Anmeldetag: 16.05.2018
(51) Int. Cl.: B60C 23/16, B60B 35/08, B60C 23/00

(54) **NUTZFAHRZEUG MIT REIFENBEFÜLLSYSTEM**
UTILITY VEHICLE WITH TIRE FILLING SYSTEM
VÉHICULE UTILITAIRE DOTÉ D'UN SYSTÈME DE GONFLAGE DES PNEUS

(30) Priorität: 22.05.2017 DE 102017111120
(43) Veröffentlichungstag der Anmeldung: 08.04.2020
(73) Patentinhaber: SAF-HOLLAND GmbH, 63856 Bessenbach (DE)
(72) Erfinder: WENZEL, Jochen, 63741 Aschaffenburg (DE)
(74) Vertreter: Müller Schupfner & Partner Patent- und Rechtsanwaltspartnerschaft mbB
(86) Internationale Anmeldenummer: PCT/EP2018/062657
(87) Internationale Veröffentlichungsnummer: WO 2018/215252

(56) Entgegenhaltungen:
- EP-A1- 1 717 122
- DE-B4-102011 007 231
- GB-A- 2 540 415

## Beschreibung

Die vorliegende Erfindung betrifft ein Nutzfahrzeug mit einem Fahrwerk, an welchem ein Reifenbefüllsystem anordenbar oder angeordnet ist.

Bekannte Reifenbefüllsysteme beziehen das benötigte Druckgas zum Füllen oder Nachfüllen eines Reifens eines Fahrzeuges aus einem Drucklufttank eines Anhängers der Nebenverbraucher, wie beispielsweise der Liftachse oder der Luftfederung usw. Der maximale Versorgungsdruck am Übergang zum Anhänger beträgt gesetzlich maximal 8,5 bar. Zur Druckerhöhung, um beispielsweise einen Luftdruck von 9 bar in den Anhängerreifen zu erzeugen, ist daher bekannt, eine Verstärkerpumpe vorzusehen, bevor das Gas auf dem höheren Druckniveau in die Achsrohre des Fahrwerkes geleitet wird. Sobald nun ein Reifen an Gasdruck verliert, wird der Gasdruck in dem entsprechenden Reifen nachgefüllt, bis der voreingestellte Reifengasdruck, insbesondere von mindestens 9 bar, erreicht ist.

Die DE 10 2011 007 231 B4 befasst sich mit Radlageranordnung, welche eine Hohlkörpereinheit umfasst und einen sich längs einer axialen Richtung erstreckenden Druckraum innerhalb der Hohlkörpereinheit aufweist.

Die DE 10 2005 029 540 A1 befasst sich mit Achskörpern, welche als Druckluftspeicher ausgebildet sind.

Die DE 27 06 801 C2 offenbart einen Achsaufbau für ein Fahrzeug, mit einem hohlen Achskörper, an dessen beiden Enden je ein Laufrad drehbar gelagert ist, welchem eine über ein Druckmittel betätigbare Bremse, eine Steuervorrichtung und einen Vorratsraum für das Druckmittel zugeordnet sind, wobei der als Vorratsraum ausgebildete Achsinnenraum mit einem Kunststoffüberzug versehen ist.

Die US 6,398,236 B1 befasst sich mit Achsen, welche einen Hohlraum aufweisen, wobei der Hohlraum als ein Druckluftreservoir fungiert, welches mit einem Feder- und/oder einem pneumatischen Hebemechanismus verbunden ist, um diesen mit Druckluft zu versorgen.

Die DE 10 2008 062 048 A1 betrifft ein Reifendruckregelsystem für Fahrzeuge mit pneumatischen Reifen, welches eine Drucknachverstärkerpumpe sowie zumindest ein Reifendrucksteuerventil aufweist.

Die DE 10 2008 062 071 A1 befasst sich mit einem Reifendruckregelsystem mit mehreren Kompressoren.

Die DE 602 08 563 T2 offenbart ein Überwachungssystem für einen Druckbehälter.

Die DE 10 2011 007 231 B4 (Dokument D1) offenbart eine Radlageranordnung, welche eine Hohlkörpereinheit, eine Fixiereinheit und eine Statoreinheit umfasst, wobei die Rotoreinheit ein luftdichtes Abdichtungsmittel aufweist, welches relativ zur Statoreinheit an der Radlageranordnung drehbar anlagerbar ist.

UK 254 04 15 A (Dokument D2) offenbart ein zentrales Reifenbefüllsystem für ein Fahrzeug, welches ein Reservoir zum Zuführen von Luft in die Reifen aufweist, sowie einen Drucksensor, welcher das System überwacht.

Die EP 1 717 122 A1 (Dokument D3) offenbart ein Fahrzeugbremssystem, welches ein Reifenmanagementsystem verwendet, um eventuelle niedrige Drücke in den Reifen zu korrigieren.

Es ist folglich bekannt, die Achsrohre des Fahrwerkes als Druckgasbehälter zu nutzen, wobei jedoch die Erhöhung des Druckniveaus einen notwendigen Einsatz einer Verstärkerpumpe erfordert, um den entsprechenden Nebenverbraucher optimal mit Gasdruck versorgen zu können. Ferner bedarf es einer Anbindung an den Gasdrucktank der Nebenverbraucher. Die bekannten Reifenbefüllsysteme bedürfen einer Anzahl an miteinander wirkenden Komponenten, welche jeweils zur Fehleranfälligkeit des Gesamtsystems beitragen. Ferner arbeiten die bekannten Reifenbefüllsysteme nicht unabhängig von dem Gasdruckkreislauf des Anhängers, so dass stets auf eine Komptabilität zwischen einem Anhänger oder einem Nutzfahrzeug und dem entsprechenden Reifenbefüllsystem zu achten ist.

Angesichts dieser Probleme im Stand der Technik ist die Aufgabe der vorliegenden Erfindung, ein Nutzfahrzeug mit einem Fahrwerk, an welchem ein Reifenbefüllsystem anordenbar ist oder angeordnet ist, bereitzustellen, welches weniger fehleranfällig ist und kostengünstiger herstellbar ist, sowie unabhängig von einem an dem Nutzfahrzeug angebrachten Druckgaskreislauf arbeitet.

Diese Aufgaben werden gelöst mit einem Nutzfahrzeug gemäß Anspruch 1. Bevorzugte Ausführungsformen sind Gegenstand der abhängigen Ansprüche. Weitere Vorteile und Merkmale der vorliegenden Erfindung ergeben sich aus der Beschreibung und der Figur.

Erfindungsgemäß umfasst das Nutzfahrzeug, welches insbesondere als Nutzfahrzeuganhänger ausgebildet ist, ein Fahrwerk, an welchem ein Reifenbefüllsystem anordenbar oder angeordnet ist, wobei das Fahrwerk mindestens eine Achse mit einem Hohlraum aufweist. Ferner ist die Achse als Druckgasspeicher, in welchem ein Gas bei einem vorgegebenen Gasdruck zum Befüllen eines Reifens des Nutzfahrzeuges mit dem Gas gespeichert ist, ausgebildet. Erfindungsgemäß weist der Druckgasspeicher eine Wandung mit einer Druckfestigkeit von mindestens 1,4 N/mm², auf. Die Achsen des Fahrwerkes sind vorzugsweise aus einem Material ausgebildet, welches eine größere Druckfestigkeit als eine von dem vorgegebenen Reifengasdruck auf die Achse ausgeübte Druckspannung aufweist. Es ist denkbar eine, insbesondere anisotrope, Kohlenstofffaser, oder ein Faser-Kunststoff-Verbund (FKV) oder ein Leichtmetall als Material für die Achsen des Fahrwerkes zu nutzen. Beispielsweise zeigen anisotrope Kohlenstofffasern hohe Festigkeiten und Steifigkeiten bei gleichzeitig geringer Bruchdehnung in axialer Richtung auf. Ferner ist es denkbar eine Keramik, insbesondere eine Hochleistungskeramik, als Material für die Achsen des Fahrwerkes zu nutzen. Bei den keramischen Werkstoffen kommt es dabei nicht nur darauf an, welches Grundmaterial, insbesondere Bornitrid, Siliciumcarbid oder Aluminiumoxid, den Grundkörper bildet. Vielmehr beeinflusst die Art und Häufigkeit von Fehlstellen, insbesondere Poren, Mikrorisse oder geringste Fremdstoffanteile, im fertigen Bauteil die konkreten Eigenschaften der Keramik. Die anwendungsbezogene Variation der Eigenschaften keramischer Werkstoffe geschieht daher in weit stärkerem Maße durch die Gestaltung der Prozessschritte, als dies beispielsweise bei Metallen der Fall ist. Durch unterschiedliche Brennverfahren und Brennatmosphären sowie durch die Korngröße und Brenntemperatur lassen sich verschiedenste Eigenschaften des gleichen Stoffgemisches erzielen. Ein Beispiel ist der Reaktionsbrand, mit dem Silizium-angereichertes Siliziumkarbid (SiC) unter Schutzgas aus Silizium- und Kohlenstoffpulver gefertigt wird. Ohne die sonst übliche Schrumpfung beim Sintern lassen sich hierdurch komplexe, vergleichsweise große Strukturen herstellen. SiSiC hat zum Beispiel eine hohe Härte, Wärmeleitfähigkeit, chemische Beständigkeit und Korrosionsfestigkeit des Siliciumcarbids, und das in den Poren eingebettete Silizium verbessert jedoch die Oxidationsbeständigkeit, so dass diese Keramik sich für den Einsatz als Konstruktionsteil in einem Fahrwerk eignet. Der vorgegebene Reifengasdruck beträgt beispielsweise mindestens 9 bar, bevorzugt nimmt der vorgegebene Reifengasdruck einen Wert zwischen 12 bis 14 bar an. Um nun die Reifen eines Fahrzeuges mit einem Reifengasdruck zwischen 12 bis 14 bar befüllen zu können, bedarf es, dass der Druckgasbehälter für eine entsprechende Druckgasspeicherung ausgelegt ist. Erfindungsgemäß weist der Druckgasspeicher folglich eine Wandung mit einer Druckfestigkeit auf, welche mindestens 1,4 N/mm² ist. Mittels der Vergrößerung des Gasdruckes auf ein wesentlich höheres Niveau in dem Fahrwerk kann ein Überströmen des Gases aus dem Gasdruckspeicher des Fahrwerkes in die Reifen des Nutzfahrzeuges realisiert werden. Die beschriebene technische Lehre ist erfindungsgemäß auf Nutzfahrzeuge anwendbar. Es ist zusätzlich denkbar, die technische Lehre auf Personenkraftwagen (PKW) anzuwenden.

Bevorzugt ist das Nutzfahrzeug im zur Befüllung des Druckgasspeichers vorgesehenen Fluidsystem oder Leitungssystem oder Versorgungssystem Verstärkerpumpen-frei ausgebildet. Die Verwendung einer Verstärkerpumpe, als auch eine Anbindung derselben an einen externen Gasdruckspeicher der Nebenverbraucher kann entfallen. Die Vergrößerung des Gasdruckes erfolgt vorschlagsgemäß ohne die Verwendung einer im Nutzfahrzeug angeordneten Verstärkerpumpe. In anderen Worten ist das Nutzfahrzeug im zur Befüllung des Druckgasspeichers vorgesehenen Fluidsystem bzw. Leitungssystem bzw. Versorgungssystem Verstärkerpumpen-frei ausgebildet. Dies hat den Vorteil, dass das vorgeschlagene System, welches ein Fahrwerk als auch ein Reifenbefüllsystem eines Nutzfahrzeuges umfasst, kostengünstiger herstellbar ist, sowie weniger fehleranfällig ist, da die Anzahl der miteinander wirkenden Komponenten verringert ist.

Bevorzugt weist die Wandung des Druckgasspeichers mindestens eine zweiaxiale, bevorzugt eine dreiaxiale, Druckfestigkeit auf. Bei einer zweiaxialen Druckfestigkeit wird eine Verformung in einer von zwei seitlichen bzw. quer verlaufenden Richtungen verhindert, während bei einer dreiaxialen Druckfestigkeit die Verformung in beiden seitlichen bzw. quer verlaufenden Richtungen verhindert wird. Beispielsweise könnte das Fahrwerk bzw. die Achse aus einem Faser-Kunststoff-Verbund (FKV) oder aus einem Leichtmetall, wie beispielsweise Aluminium, Magnesium oder Titan oder dergleichen, oder eine Keramik ausgebildet sein. Es ist ferner denkbar, den Druckgasspeicher aus einem anderen beliebigen Material herzustellen, welches die gewünschte Druckfestigkeit aufweist.

Erfindungsgemäß ist der Druckgasspeicher mittels einer externen Druckgasversorgungseinheit bei Bedarf auf einen Gasdruck höher als der vorgegebene Reifengasdruck auf mindestens 14 bar befüllbar, wobei die externe Druckgasversorgungseinheit einen Kompressor an einer Tankstelle oder einer Werkstatt umfasst. Vorliegend ist mit externer Druckgasversorgungseinheit eine lokal außerhalb eines Nutzfahrzeuges oder eines Anhängers positionierte Druckgasversorgungseinheit gemeint. Diese externe Druckgasversorgungseinheit ist nur bei Bedarf, wenn der Gasdruck in dem Druckgasbehälter kleiner als 14 bar ist, aufzusuchen, um das Druckgas in dem Druckgasbehälter aufzufüllen.

Ferner bevorzugt steht der Gasdruckspeicher mit mindestens einem Achsstummel, über welchen das Gas in einen Reifen leitbar ist, in Fluidverbindung, wobei der Achsstummel vorzugsweise wenigstens teilweise als Gasspeicher ausgebildet ist. Bevorzugt dient ein Achsstummel zwischen dem Fahrwerk und einem Reifen des Fahrzeuges als Mediator für das Druckgas, wobei das Druckgas teilweise in dem Achsstummel gespeichert ist. Hierzu ist der Achsstummel mit einem entsprechenden Hohlraum bzw. einer Gasleitung, welche bevorzugt als eine Innenwandung des Achsstummels ausgebildet ist, ausgebildet. Bevorzugt wird als Druckgas Luft, Kohlendioxid oder ein inertes Gas wie beispielsweise Stickstoff, Argon oder ein Gemisch der genannten Gase verwendet.

Ferner bevorzugt umfasst die mindestens eine Achse des Fahrwerkes eine Befülleinheit, insbesondere eine Ventilvorrichtung, zum Befüllen mit dem Gas, insbesondere mittels der externen Druckgasversorgungseinheit. Weiter bevorzugt umfasst die Befülleinheit eine Ventilvorrichtung, welche insbesondere bi-direktional ausgebildet ist. Durch das bi-direktionale Ausbilden der Ventilvorrichtung kann Gas sowohl in den Gasdruckspeicher als auch aus diesem heraus geleitet werden. Bevorzugt weist eine verwendete Ventilvorrichtung eine Leckagensicherung auf. Hierdurch kann vermieden werden, dass das Gas über die Ventilvorrichtung in die Umgebung entweichen kann.

Ferner bevorzugt ist an der mindestens einen Achse mindestens ein Sensor zum, insbesondere fortlaufenden, Erfassen eines mit dem vorgegebenen Gasdruck korrelierten Sensorsignals in dem Gasdruckspeicher angeordnet. Im befüllten Zustand des Gasdruckspeichers steht die mindestens eine Achse des Fahrwerkes unter Druck, wobei bei einem eventuellen Achsriss die komprimierte Luft aus dem Gasdruckspeicher nach außen entweichen kann. Durch das Entweichen des Gases aus dem Gasdruckspeicher sinkt der Druck im Gasdruckspeicher. Ein solcher Druckabfall kann beispielsweise ein Indikator für ein Leck (Riss) in dem Fahrwerk sein. Zur Überwachung des Druckgasspeichers ist daher an dem Fahrwerk ein Sensor, insbesondere ein Drucksensor, zum Überwachen des Gasdruckes angebracht.

Ferner bevorzugt ist der mindestens eine Sensor mit einer Steuerung verbunden, die zum Empfangen und Auswerten des vom Sensor erfassten Gasdruckes ausgebildet ist. Die Steuerung kann folglich in situ einem verminderten Druck, welcher beispielsweise durch ein Leck oder dergleichen in dem Gasdruckspeicher hervorgerufen ist, ermitteln. Es ist ferner denkbar, dass der mindestens eine Sensor neben dem Gasdruck auch eine Gastemperatur und/oder eine Gasdichte erfasst. Die erfassten Sensorwerte (Gasdruck, Gastemperatur, Gasdichte) können an die Steuerung weitergegeben werden, wobei in der Steuerung ein Auswerteprotokoll hinterlegt ist, auf Basis dessen ermittelbar ist, ob Gas entwichen ist, oder ob äußere Einflüsse, wie beispielsweise die Außentemperatur, das Gasvolumen in den Achsen des Fahrwerkes verkleinert bzw. vergrößert hat. Die Außentemperatur im Winter ist üblicherweise geringer als im Sommer.

Ferner bevorzugt ist die Steuerung dazu ausgebildet, nach einem Erfassen eines Gasdruckes kleiner als der vorgegebene Gasdruck einem Fahrer ein Indikatorsignal mittels einer Indikatorvorrichtung anzuzeigen, welche den Fahrer auf einen zu geringen Gasdruck in dem Gasdruckspeicher hinweist. Hierdurch kann ein Fahrer des Nutzfahrzeuges sofort oder zeitnah reagieren und den Gasdruckspeicher mittels einer externen Druckgasversorgungseinheit, wie beispielsweise einem Kompressor an einer Tankstelle oder einer Werkstatt, befüllen, oder bei Vorhandensein eines Lecks an dem Gasdruckspeicher entsprechende Maßnahmen zum Reparieren des Gasdruckspeichers vornehmen.

Ferner bevorzugt ist das Indikatorsignal ein optisches und/oder akustisches Signal, insbesondere ist die Indikatorvorrichtung als eine Lampe und/oder als ein Tongenerator, vorzugsweise an einem Armaturenbrett des Fahrzeuges, ausgebildet. Das Indikatorsignal kann beispielsweise als optisches Signal unterschiedlicher Wellenlängen wiedergegeben sein. Beispielsweise könnte ein derart optisches Signal in Form eines Ampelcodes die Druckverringerung in dem Gasdruckspeicher im Vergleich zu dem vorgegebenen Gasdruck wiedergeben. Beispielsweise könnte dann ein grünes Licht eine geringfügige Druckverringerung anzeigen, welche noch kein Nachfüllen des Druckgases bedarf. Ein gelbes Licht könnte bereits eine größere Druckverringerung anzeigen, welche anzeigt, dass ein Nachfüllen des Druckgases zeitnah angebracht wäre. Ein rotes Licht beispielsweise könnte einen nicht ausreichenden Druck zur Befüllung eines Reifens anzeigen und damit anzeigen, dass ein Nachfüllen des Druckgases möglichst sofort zu erfolgen hat. Ein ähnlicher Indikator kann ferner beispielsweise über ein akustisches Signal gegeben werden, wobei auch hier das akustische Muster einen entsprechenden Gasdruckverlust anzeigt. Ferner denkbar ist die Vermischung oder Überlagerung eines solchen optischen und akustischen Signals.

Bevorzugt ist die Steuerung in einem elektronischen Bremssystem (EBS) angeordnet. Dies hat den Vorteil, dass eine bereits vorhandene Steuerung zur Auswertung der Sensorsignale verwendbar ist. Es bedarf folglich keiner weiteren Komponente.

Weitere Vorteile und Merkmale der vorliegenden Erfindung ergeben sich aus der nachfolgenden Beschreibung einer bevorzugten Ausführungsform mit Bezug auf die beigefügte Figur. Es zeigt:

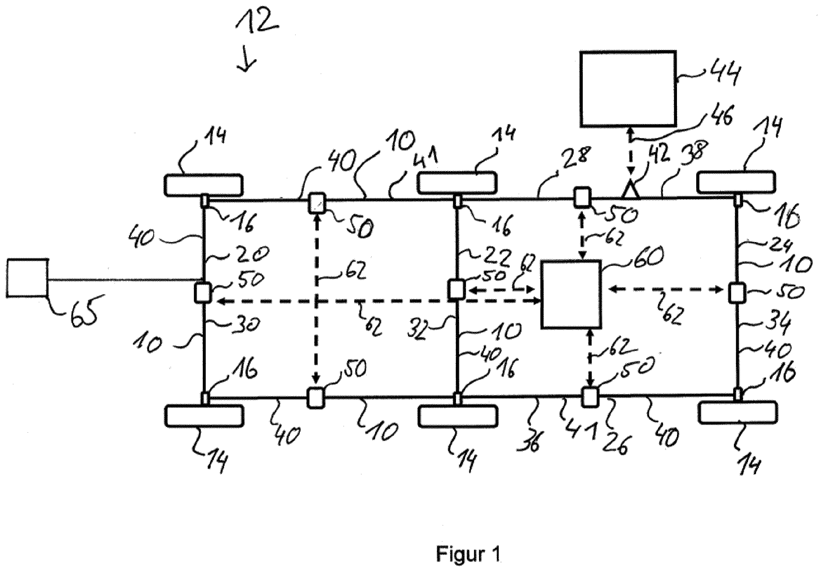

- Figur 1:: eine schematische Draufsicht auf ein Fahrwerk, welches mit einem Reifenbefüllsystem verbunden ist.

Figur 1 zeigt ein Fahrwerk 10 eines Nutzfahrzeuges 12, insbesondere eines Anhängers. Das Nutzfahrzeug 12 weist Reifen 14 auf, welche über ein Achsstummel 16 mit dem Fahrwerk 10 in Verbindung stehen. Die Achsen 20 bis 28 des Fahrwerkes 10 weisen jeweils einen Hohlraum 30 bis 38 auf, welcher als Gasdruckspeicher 40 dient. Die Wandungen 41 des Gasdruckspeichers 40 weisen eine Druckfestigkeit von mindestens 1,4 N/mm² auf. Die Wandungen 41 des Gasdruckspeichers 40 können einen Druck von 14 bar oder mehr aufnehmen bzw. einem solchen Druck Stand halten, ohne dass der Gasdruckspeicher 40 dabei beschädigt wird.

An mindestens einer Achse 20 bis 28 des Fahrwerkes 10 ist ferner eine Befülleinheit 42 angeordnet, welche bei Bedarf mit einer externen Druckgasversorgungseinheit 44 verbindbar ist. Die Druckversorgungseinheit 44 ist beispielsweise als ein Kompressor an einer Tankstelle oder an einer Werkstatt ausgebildet. Die vorübergehende Verbindbarkeit der Druckgasverorgungseinheit 44 mit der Befülleinheit 42 ist durch den gestrichelten Doppelpfeil 46 angedeutet.

Erfasst beispielsweise der mindestens eine Sensor 50 ein mit dem Gasdruck korreliertes Sensorsignal oder einen Gasdruck in den Gasdruckspeicher 40, welches/welcher geringer als ein vorgegebener Gasdruck, insbesondere geringer als 14 bar, ist, so wird das von dem mindestens einen Sensor 50 erfasste Drucksignal an eine Steuerung 60 gesendet. Wie in der Figur 1 dargestellt, können beispielsweise mehrere Sensoren 50 an dem Fahrwerk 10 angeordnet sein, insbesondere können an jeder Achse 20 bis 28, jeweils ein Sensor 50 angeordnet sein. Jeder dieser Sensoren 50 ist dazu ausgebildet, mit der Steuerung 60 zu kommunizieren. Das Kommunizieren der Sensoren 50 mit der Steuerung 60 ist jeweils durch die Doppelpfeile 62 angezeigt. Ferner können die Sensoren 50 unterschiedliche Sensorsignale erfassen, welche jeweils mit dem Gasdruck korreliert werden können. Beispielsweise können die Sensoren 50 einen Druck, oder eine Temperatur erfassen, oder eine elektronische oder mechanische Druckmessung durchführen.

Die Steuerung 60 ist zum Empfangen mindestens eines Sensorsignals des Sensors 50 ausgebildet, sowie zum Auswerten desselben. Ist ein Ergebnis einer Druckauswertung der Steuerung 60 beispielsweise, dass der vorgegebene Gasdruck in dem Gasspeicher 40 geringer als der vorgegebene Gasdruck ist, so wird beispielsweise mittels einer Indikatorvorrichtung 65 einem Fahrer des Nutzfahrzeuges 12 der verringerte Druck in dem Gasdruckspeicher 40 angezeigt. Die Indikatorvorrichtung 65 kann beispielsweise als eine Lampe und/oder als ein Tongenerator ausgebildet sein, welche an einem Armaturenbrett des Nutzfahrzeuges angeordnet ist.

Dadurch, dass der Gasdruckspeicher 40 ein erhöhtes Gasdruckniveau aufweist, und die Achsstummel 16 jeweils mindestens teilweise als Gasspeicher ausgebildet sind, kann ein Gasdruck in einem Reifen 14 unmittelbar nachgefüllt werden, sofern dies erforderlich ist, insbesondere ohne die Verwendung einer Verstärkerpumpe. Der Nutzer des Fahrzeuges 12 braucht daher den Reifendruck in den Reifen 14 selbst nicht mehr überwachen. Ein Nutzer des Fahrzeuges 12 muss lediglich dann reagieren, wenn die Steuerung 60 über die Indikatorvorrichtung 65 anzeigt, dass der Gasdruckspeicher 40 einen geringeren Gasdruck als den vorgegebenen Gasdruck aufweist. In einem solchen Fall kann der Gasdruckspeicher 40 über die Befüllvorrichtung 42 und mittels der externen Druckgasversorgungseinheit 44 wieder mit Druckgas aufgefüllt werden.

Folglich bedarf das vorgeschlagene Nutzfahrzeug, welches ein Fahrwerk sowie ein Reifenbefüllsystem aufweist, weder einer Anbindung an einen Gasdruckbehälter eines Nebenverbrauchers noch einer Verstärkerpumpe zum Verstärken des Gasdruckes.

### Bezugszeichenliste:

- 10: Fahrwerk
- 12: Nutzfahrzeug
- 14: Reifen
- 16: Achsstummel
- 20-28: Achse
- 30-38: Hohlraum
- 40: Gasdruckspeicher
- 41: Wandung
- 42: Befülleinheit
- 44: externe Druckgasversorgungseinheit
- 46: vorübergehende Verbindung
- 50: Sensor
- 60: Steuerung
- 62: Verbindung zwischen Steuerung 60 und Sensor 50
- 65: Indikatorvorrichtung

## Patentansprüche

1. Nutzfahrzeug (12), insbesondere Nutzfahrzeuganhänger, umfassend ein Fahrwerk (10), an welchem ein Reifenbefüllsystem anordenbar oder angeordnet ist,
wobei das Fahrwerk (10) mindestens eine Achse (20-28) mit einem Hohlraum (30-38) aufweist,
wobei die Achse (20-28) als Druckgasspeicher (40), in welchem ein Gas bei einem vorgegebenen Gasdruck zum Befüllen eines Reifens (14) des Nutzfahrzeuges (12) mit dem Gas gespeichert ist, ausgebildet ist, und
wobei der Druckgasspeicher (40) eine Wandung (41) mit einer Druckfestigkeit von mindestens 1,4 N/mm² aufweist,
**dadurch gekennzeichnet, dass**
der Druckgasspeicher (40) mittels einer externen Druckgasversorgungseinheit (44) bei Bedarf bis auf einen Gasdruck höher als der vorgegebene Reifengasdruck auf mindestens 14 bar befüllbar ist,
wobei die externe Druckgasversorgungseinheit (44) einen Kompressor an einer Tankstelle oder einer Werkstatt umfasst.

2. Nutzfahrzeug (12) nach Anspruch 1, wobei die Wandung (41) des Druckgasspeichers (40) mindestens eine zweiaxiale, bevorzugt eine dreiaxiale, Druckfestigkeit aufweist.

3. Nutzfahrzeug (12) nach Anspruch 1 oder 2, wobei die Achsen (20-28) des Fahrwerkes (10) aus einem Material ausgebildet sind, welches eine größere Druckfestigkeit als eine von dem vorgegebenen Reifengasdruck auf die Achse (20-28) ausgeübte Druckspannung aufweist.

4. Nutzfahrzeug (12) nach einem der vorhergehenden Ansprüche, wobei das Nutzfahrzeug (12) im zur Befüllung des Druckgasspeichers (40) vorgesehenen Fluidsystem oder Leitungssystem oder Versorgungssystem Verstärkerpumpen-frei ausgebildet ist.

5. Nutzfahrzeug (12) nach einem der vorhergehenden Ansprüche, wobei der Gasdruckspeicher (40) mit mindestens einem Achsstummel (16), über welchen das Gas in einen Reifen (14) leitbar ist, in Fluidverbindung steht, wobei der Achsstummel (16) bevorzugt wenigstens teilweise als Gasspeicher ausgebildet ist.

6. Nutzfahrzeug (12) nach einem der vorhergehenden Ansprüche, wobei die mindestens eine Achse (20-28) des Fahrwerks (10) eine Befülleinheit (42), insbesondere eine Ventilvorrichtung, zum Befüllen mit dem Gas, insbesondere mittels der externen Druckgasversorgungseinheit (44), umfasst.

7. Nutzfahrzeug (12) nach Anspruch 6, wobei die Befülleinheit (42) eine Ventilvorrichtung ist, welche bi-direktional ausgebildet ist.

8. Nutzfahrzeug (12) nach einem der vorhergehenden Ansprüche, wobei an der mindestens einen Achse (20-28) mindestens ein Sensor (50) zum, insbesondere fortlaufenden, Erfassen eines mit dem vorgegebenen Gasdruck korrelierten Sensorsignals in dem Druckgasspeicher (40) angeordnet ist.

9. Nutzfahrzeug (12) nach Anspruch 8, wobei der mindestens eine Sensor (50) mit einer Steuerung (60) verbunden ist, die zum Empfangen und zum Auswerten des vom Sensor (50) erfassten Sensorsignals ausgebildet ist.

10. Nutzfahrzeug (12) nach Anspruch 8 oder 9, wobei eine Vielzahl an Sensoren (50) vorgesehen ist, wobei die Vielzahl der Sensoren (50) unterschiedliche Sensorsignale erfasst, welches jeweils mit dem Gasdruck korrelierbar ist, insbesondere können die Sensoren (50) einen Druck, oder eine Temperatur erfassen, oder eine elektronische oder mechanische Druckmessung durchführen.

11. Nutzfahrzeug (12) nach Anspruch 9 oder 10, wobei die Steuerung (60) ferner dazu ausgebildet ist, nach einem Erfassen eines Gasdruckes kleiner als der vorgegebene Gasdruck einem Fahrer ein Indikatorsignal mittels einer Indikatorvorrichtung (65) anzuzeigen, welche den Fahrer auf einen zu geringen Gasdruck in dem Druckgasspeicher (40) hinweist.

12. Nutzfahrzeug (12) nach Anspruch 11, wobei das Indikatorsignal ein optisches und/oder akustisches Signal ist, insbesondere ist die Indikatorvorrichtung (65) als eine Lampe und/oder als sein Tongenerator, vorzugsweise an einem Armaturenbrett des Fahrzeuges (12), ausgebildet.

13. Nutzfahrzeug (12) nach einem der Ansprüche 9-12, wobei die Steuerung (60) in einem elektronischen Bremssystem (EBS) angeordnet ist.

## Claims

1. A utility vehicle (12), in particular utility vehicle trailer, comprising a chassis (10) on which a tire inflation system can be arranged or is arranged,
wherein the chassis (10) has at least one axle (20-28) with a cavity (30-38), wherein the axle (20-28) is embodied as a compressed-gas reservoir (40) in which a gas is stored at a specified gas pressure for inflating a tire (14) of the utility vehicle (12) with the gas, and
wherein the compressed-gas reservoir (40) has a wall (41) with a compressive strength of at least 1.4 N/mm2,
**characterized in that**
the compressed-gas reservoir (40) can be filled when necessary up to a gas pressure which is higher than the specified tire gas pressure, to at least 14 bar, by means of an external compressed-gas supply unit (44),
wherein the external compressed-gas supply unit (44) comprises a compressor at a gas station or a workshop.

2. The utility vehicle (12) as claimed in claim 1, wherein the wall (41) of the compressed-gas reservoir (40) has biaxial, preferably triaxial, compressive strength.

3. The utility vehicle (12) as claimed in claim 1 or 2, wherein the axles (20-28) of the chassis (10) are formed from a material which has a higher compressive strength than a compressive stress which is applied to the axle (20-28) by the specified tire gas pressure.

4. The utility vehicle (12) as claimed in one of the preceding claims, wherein the utility vehicle (12) is constructed without a booster pump in the fluid system or line system or supply system which is provided for filling the compressed-gas reservoir (40).

5. The utility vehicle (12) as claimed in one of the preceding claims, wherein the gas pressure reservoir (40) is fluidically connected to at least one axle stub (16) via which the gas can be conducted into a tire (14), wherein the axle stub (16) is preferably embodied at least partially as a gas reservoir.

6. The utility vehicle (12) as claimed in one of the preceding claims, wherein the at least one axle (20-28) of the chassis (10) comprises an inflation unit (42), in particular a valve device, for inflation with the gas, in particular by means of the external compressed-gas supply unit (44).

7. The utility vehicle (12) as claimed in claim 6, wherein the inflation unit (42) is a valve device which is embodied in a bi-directional fashion.

8. The utility vehicle (12) as claimed in one of the preceding claims, wherein at least one sensor (50) for, in particular continuously, acquiring a sensor signal, correlated with the specified gas pressure, is arranged in the compressed-gas reservoir (40), on the at least one axle (20-28).

9. The utility vehicle (12) as claimed in claim 8, wherein the at least one sensor (50) is connected to a controller (60) which is designed to receive and evaluate the sensor signal which is acquired by the sensor (50).

10. The utility vehicle (12) as claimed in claim 8 or 9, wherein a multiplicity of sensors (50) is provided, wherein the multiplicity of sensors (50) acquires different sensor signals, which signals can each be correlated with the gas pressure, in particular the sensors (50) can sense a pressure or a temperature, or carry out an electronic or mechanical pressure measurement.

11. The utility vehicle (12) as claimed in claim 9 or 10, wherein the controller (60) is also designed to display, after a gas pressure which is lower than the specified gas pressure has been sensed, an indicator signal to a driver by means of an indicator device (65) which alerts the driver to an excessively low gas pressure in the compressed-gas reservoir (40).

12. The utility vehicle (12) as claimed in claim 11, wherein the indicator signal is an optical signal and/or acoustic signal, in particular the indicator device (65) is embodied as a lamp and/or as a sound generator, preferably on a dashboard of the vehicle (12).

13. The utility vehicle (12) as claimed in one of claims 9 to 12, wherein the controller (60) is arranged in an electronic brake system (EBS).

## Revendications

1. Véhicule utilitaire (12), en particulier remorque de véhicule utilitaire, comprenant
un train de roulement (10) sur lequel est disposé ou peut être disposé un système de gonflage des pneumatiques,
le train de roulement (10) ayant au moins un essieu (20 - 28) avec une cavité (30 - 38),
l'essieu (20 - 28) étant réalisé sous la forme d'un réservoir de gaz comprimé (40) dans lequel un gaz est stocké à une pression de gaz prédéterminée pour le gonflage d'un pneumatique (14) du véhicule utilitaire (12) avec ledit gaz, et
le réservoir de gaz comprimé (40) comprenant une paroi (41) ayant une résistance à la compression d'au moins 1,4 N/mm²,
**caractérisé en ce que**
si nécessaire, le réservoir de gaz comprimé (40) peut être rempli jusqu'à une pression de gaz supérieure à la pression de gaz prédéterminée des pneumatiques, en particulier jusqu'à au moins 14 bars, au moyen d'une unité externe d'alimentation en gaz comprimé (44),
et l'unité externe d'alimentation en gaz comprimé (44) comprend un compresseur dans une station-service ou un atelier.

2. Véhicule utilitaire (12) selon la revendication 1,
dans lequel la paroi (41) du réservoir de gaz comprimé (40) présente au moins une résistance à la compression biaxiale, de préférence triaxiale.

3. Véhicule utilitaire (12) selon la revendication 1 ou 2,
dans lequel les essieux (20 - 28) du train de roulement (10) sont formés d'un matériau qui présente une résistance à la compression supérieure à une contrainte de compression exercée sur l'essieu (20 - 28) par la pression de gaz prédéterminée des pneumatiques.

4. Véhicule utilitaire (12) selon l'une des revendications précédentes,
le véhicule utilitaire (12) étant réalisé sans pompe d'amplification dans le système de fluides ou dans le système de conduites ou dans le système d'alimentation prévu pour le remplissage du réservoir de gaz comprimé (40).

5. Véhicule utilitaire (12) selon l'une des revendications précédentes,
dans lequel
le réservoir de gaz comprimé (40) est en communication fluidique avec au moins un moignon d'essieu (16) par lequel le gaz peut être amené dans un pneumatique (14), le moignon d'essieu (16) étant de préférence réalisé au moins partiellement sous la forme d'un réservoir de gaz.

6. Véhicule utilitaire (12) selon l'une des revendications précédentes,
dans lequel
ledit au moins un essieu (20 - 28) du train de roulement (10) comporte une unité de remplissage (42), en particulier un dispositif de valve, pour le remplissage avec le gaz, en particulier au moyen de l'unité externe d'alimentation en gaz comprimé (44).

7. Véhicule utilitaire (12) selon la revendication 6,
dans lequel
l'unité de remplissage (42) est un dispositif de valve qui est réalisé de manière bidirectionnelle.

8. Véhicule utilitaire (12) selon l'une des revendications précédentes,
dans lequel
au moins un capteur (50) est disposé sur ledit au moins un essieu (20 - 28) pour détecter, en particulier en continu, un signal de capteur corrélé à la pression de gaz prédéterminée dans le réservoir de gaz comprimé (40).

9. Véhicule utilitaire (12) selon la revendication 8,
dans lequel
ledit au moins un capteur (50) est connecté à un contrôleur (60) qui est réalisé pour recevoir et évaluer le signal de capteur détecté par le capteur (50).

10. Véhicule utilitaire (12) selon la revendication 8 ou 9,
dans lequel
il est prévu une pluralité de capteurs (50), la pluralité de capteurs (50) détectant différents signaux de capteur, qui peuvent être corrélés chacun à la pression du gaz, en particulier les capteurs (50) peuvent détecter une pression ou une température, ou effectuer une mesure de pression électronique ou mécanique.

11. Véhicule utilitaire (12) selon la revendication 9 ou 10,
dans lequel
le contrôleur (60) est en outre réalisé pour afficher un signal d'indication à un conducteur du véhicule au moyen d'un dispositif indicateur (65) après détection d'une pression de gaz inférieure à la pression de gaz prédéterminée, qui indique au conducteur que la pression de gaz dans le réservoir de gaz comprimé (40) est trop basse.

12. Véhicule utilitaire (12) selon la revendication 11,
dans lequel
le signal d'indication est un signal optique et/ou acoustique, en particulier le dispositif d'indication (65) est réalisé sous la forme d'une lampe et/ou de son générateur de son, de préférence sur un tableau de bord du véhicule (12).

13. Véhicule utilitaire (12) selon l'une des revendications 9 à 12,
dans lequel
le contrôleur (60) est disposé dans un système de freinage électronique (EBS).
